Europäisches Patentamt

European Patent Office

Office européen des brevets

(19)

(11) **EP 0 915 767 B1**

(12) **FASCICULE DE BREVET EUROPEEN**

(45) Date de publication et mention
de la délivrance du brevet:
**18.12.2002 Bulletin 2002/51**

(51) Int Cl.$^7$: **B60H 1/00**

(21) Numéro de dépôt: **97937613.4**

(86) Numéro de dépôt international:
**PCT/FR97/01442**

(22) Date de dépôt: **01.08.1997**

(87) Numéro de publication internationale:
**WO 98/005522 (12.02.1998 Gazette 1998/06)**

(54) **PROCEDE POUR ESTIMER LA PUISSANCE ABSORBEE PAR UNE INSTALLATION DE CLIMATISATION D'UN VEHICULE A MOTEUR ET POUR COMMANDER UN MOTEUR A COMBUSTION INTERNE**

VERFAHREN ZUR ABSCHÄTZUNG DER LEISTUNGSBEDARF EINER KRAFTFAHRZEUGKLIMAANLAGE UND ZUR STEUERUNG EINER BRENNKRAFTMASCHINE

METHOD FOR ESTIMATING THE POWER CONSUMPTION OF A MOTOR VEHICLE AIR-CONDITIONING SYSTEM AND CONTROLLING AN INTERNAL COMBUSTION ENGINE

(84) Etats contractants désignés:
**DE ES FR GB IT**

(30) Priorité: **02.08.1996 FR 9609779**
**20.09.1996 FR 9611476**

(43) Date de publication de la demande:
**19.05.1999 Bulletin 1999/20**

(73) Titulaire: **Renault s.a.s.**
**92100 Boulogne Billancourt (FR)**

(72) Inventeurs:
• **BANCON, François**
 **F-78100 Saint Germain en Laye (FR)**
• **METAYER, Olivier**
 **F-91510 Lardy (FR)**
• **ROQUE, Frédéric**
 **F-94450 Limeil Brevannes (FR)**
• **TOUZEAU, Yves**
 **F-91790 Boissy-sur-Saint-Yon (FR)**

(74) Mandataire: **Srour, Elie et al**
**Renault,**
**Département 00267**
**TCR AVA 0-56,**
**1, avenue du Golf**
**78288 Guyancourt Cedex (FR)**

(56) Documents cités:
**EP-A- 0 127 001**　　**EP-A- 0 281 152**
**FR-A- 2 711 731**　　**GB-A- 2 196 759**
**GB-A- 2 217 876**　　**US-A- 4 698 977**
**US-A- 4 856 291**　　**US-A- 4 898 005**
**US-A- 4 926 651**　　**US-A- 5 046 924**

• **PATENT ABSTRACTS OF JAPAN vol. 009, no. 235 (M-415), 21 septembre 1985 & JP 60 090936 A (HONDA GIKEN KOGYO KK), 22 mai 1985,**
• **PATENT ABSTRACTS OF JAPAN vol. 012, no. 247 (M-717), 13 juillet 1988 & JP 63 034218 A (DIESEL KIKI CO LTD), 13 février 1988,**

**Description**

La présente invention concerne un procédé pour estimer la puissance absorbée par une installation de climatisation équipant un véhicule à moteur.

La présente invention concerne également un procédé de commande d'un moteur à combustion interne destiné à équiper un véhicule automobile ou routier comportant une installation de climatisation.

Les installations de climatisation équipant les véhicules à moteur sont classiquement constituées d'un circuit de fluide réfrigérant en boucle fermée sur lequel sont disposés dans le sens de circulation du fluide : un compresseur entraîné par le moteur par l'intermédiaire d'une poulie à embrayage piloté, un condenseur associé à un premier groupe moto-ventilateur, un détendeur et un évaporateur associé à un second groupe moto-ventilateur.

Le compresseur étant entraîné par le moteur du véhicule par l'intermédiaire d'un système d'accouplement sélectif telle qu'une poulie à embrayage piloté, il en résulte donc qu'une partie de la puissance produite par le moteur se trouve être utilisée par le compresseur lorsque la poulie est embrayée.

Il apparaît donc important de prendre en compte dans la commande du moteur la puissance mécanique de l'installation de climatisation lorsque celle-ci est en service et ce, afin d'améliorer le comportement de ce dernier et éviter des à-coups voire le calage du moteur dans certaines circonstances extrêmes.

On connaît ainsi un procédé de commande d'un moteur à combustion interne associé à une installation de climatisation, dans lequel la puissance utile du moteur à combustion interne est augmentée, par exemple par régulation vers le haut de la vitesse de rotation, ou bien par augmentation de la quantité d'air amenée à ce moteur à combustion interne, avant que le compresseur soit mis en fonctionnement avec un retard prédéfini. Dans ce procédé, la puissance utile est respectivement augmentée d'une valeur fixe prédéfinie. Le retard avant l'enclenchement du compresseur est nécessaire, parce que la puissance utile du moteur à combustion interne ne peut pas toujours être augmentée brusquement.

Il est également connu, dans un procédé de ce type, de faire appel à un appareil de commande pour commander les fonctions d'un moteur à combustion interne. Cela signifie donc que le compresseur de l'installation de climatisation n'est plus commandé directement par un thermostat appliqué par exemple, dans l'espace interne du véhicule. Au contraire, le signal du thermostat est amené à l'appareil de commande qui, sur la base de ce signal, augmente tout d'abord la puissance utile du moteur à combustion interne, et ensuite, enclenche avec retard le compresseur. L'augmentation de la puissance utile du moteur à combustion interne sert à maintenir aussi constante que possible la vitesse de rotation du moteur à combustion interne, même lors de l'enclenchement du compresseur.

Un tel procédé est connu par exemple, par le document EP-A-281.152 ou bien par le document EP-A-127.001. L'augmentation de la puissance utile du moteur à combustion interne s'effectue, dans les deux cas, en fonction de l'état de commutation d'un commutateur enclenchant l'installation de climatisation. Le branchement du compresseur s'effectue dans le cas du document EP-A-281.152, lorsque la puissance du moteur à combustion interne a atteint un seuil prédéfini, tandis que la mise en service du compresseur dans le cas du document EP-A-127.001 s'effectue lorsqu'un laps de temps prédéfini s'est écoulé.

L'inconvénient de ces procédés est que la puissance absorbée par l'installation de climatisation lors de l'enclenchement du compresseur n'est pas constante, on ne maîtrise donc pas complètement les fluctuations de la puissance absorbée par le compresseur. En effet, le calculateur d'injection doit dans ses différentes stratégies d'élaboration des paramètres de commande du moteur, comme celle de calcul du régime de régulation ralenti, prendre en compte l'incidence du fonctionnement du compresseur dans le cas le plus sévère, c'est-à-dire pour la valeur maximale de la puissance absorbée, laquelle se présente rarement en pratique. Cet inconvénient est particulièrement gênant dans le cas de compresseurs à capacité variable, dont l'utilisation se généralise, car alors l'énergie instantanée consommée par un tel compresseur peut être très largement inférieure à sa puissance nominale, c'est-à-dire sa puissance maximale.

Il est connu par le document EP-A-383.883, d'améliorer la prise en compte de l'installation de climatisation lors de l'enclenchement du compresseur, en exploitant la valeur de la pression du fluide réfrigérant mesurée dans la zone de haute pression du compresseur, cette valeur de pression fournissant en première approximation une estimation de la puissance instantanée absorbée par le compresseur.

En effet, l'effort nécessaire lors de la mise en route du compresseur est d'autant plus -élevé que la pression est plus élevée dans la zone de haute pression. Grâce à cette mesure de la pression, la charge du moteur à combustion interne intervenant lors de la mise en service du compresseur peut alors être déterminée de façon plus précise et la puissance utile du moteur à combustion interne peut être, en conséquence, mieux adaptée.

De plus, selon l'enseignement du document EP-A-383.883, le compresseur est mis en service après l'écoulement d'un temps de retard susceptible d'être prédéfini. De ce fait, il reste un temps suffisant pour régler en augmentation la puissance utile du moteur à combustion interne de façon appropriée à la charge attendue du fait du branchement du consommateur.

La connaissance de cette information de pression en plus de la détection des signaux de commande de mise en service et d'arrêt de l'installation de climatisation, permet donc au système électronique de contrôle du moteur, ou calculateur d'injection, d'optimiser le rendement du moteur, ce qui permet de diminuer la consommation en carburant du moteur et de réduire les émissions de polluants dans les gaz d'échappement.

Il est également connu par le document FR-A-2.711.731, qui est considéré comme l'état de la technique le plus proche, de compléter l'information haute pression en sortie du compresseur par une seconde information liée au fonctionnement de l'appareil de climatisation (telle que la vitesse de rotation du compresseur ou la température de l'évaporateur ou la basse pression à l'entrée du compresseur ou encore la température du flux d'air extérieur) et ce, afin d'obtenir une meilleure estimation de la puissance absorbée par la climatisation, de sorte que l'injection du moteur puisse être ajustée encore plus exactement.

Il s'avère toutefois que, si une telle méthode permet d'obtenir effectivement des estimations de la puissance absorbée et constitue à ce titre un réel progrès par rapport aux solutions antérieures, les estimations fournies présentent, selon les observations de la Demanderesse, des écarts demeurant encore importants avec les valeurs réelles de la puissance absorbée par l'installation de climatisation. Le modèle retenu à deux paramètres apparaît notamment insuffisant pour prendre en compte la complexité du fonctionnement de la puissance absorbée par le compresseur de climatisation.

Par ailleurs, les stratégies connues de commande des moteurs à combustion interne associés à des installations de climatisation, telles qu'elles ont été rappelées ci-dessus, ne visent que les phases de mise en service ou d'arrêt de cette dernière. Or au cours d'un même cycle de fonctionnement de l'installation de climatisation, la puissance absorbée réellement est à même de fluctuer de façon très importante. De plus, les stratégies selon l'art antérieur n'intéressent qu'un nombre extrêmement limité de conditions de fonctionnement du moteur.

Or, compte tenu de la sévérité sans cesse croissante des normes antipollution et des contraintes pesant sur la consommation en carburant des moteurs à combustion interne, le calculateur d'injection doit, pour déterminer au mieux les paramètres de commande du moteur, disposer d'une information particulièrement fiable et précise quant à la puissance mécanique absorbée par l'installation de climatisation et il doit exploiter cette information en continue dans une gamme beaucoup plus large de conditions de fonctionnement du moteur.

L'objet de la présente invention est donc de remédier aux inconvénients précités en fournissant un procédé de contrôle du fonctionnement de l'installation de climatisation qui produit une estimation de la puissance absorbée par cette installation extrêmement précise et fiable, ce procédé étant tout à la fois simple et économique à mettre en oeuvre puisqu'aucun appareillage matériel supplémentaire et en particulier qu'aucun capteur spécifique, n'est nécessaire.

L'invention concerne tout d'abord un procédé pour estimer la puissance absorbée par le compresseur d'une installation de climatisation équipant un véhicule à moteur du type comprenant un circuit fermé de fluide réfrigérant sur lequel est disposé ce compresseur, un condenseur associé à un premier groupe moto-ventilateur, un détendeur, un évaporateur associé à un second groupe moto-ventilateur et un calculateur de climatisation contrôlant le fonctionnement de l'installation de climatisation en fonction de commandes réglées par l'utilisateur, ce procédé comprenant des étapes d'acquisition des valeurs prises par des informations liées au fonctionnement de ladite installation de climatisation et des étapes de calcul ou de lecture dans des tables de ladite puissance absorbée en fonction desdites valeurs,

Selon l'invention, le procédé pour estimer la puissance absorbée par le compresseur d'une installation de climatisation est caractérisé en ce que lesdites informations comprennent :

- la haute pression en sortie de compresseur ;
- la vitesse de rotation du compresseur ;
- le débit d'air traversant l'évaporateur.

L'objet de la présente invention concerne donc également un procédé de commande pour moteur à combustion interne utilisant une estimation de la puissance absorbée par l'installation de climatisation à la fois précise et fiable, ce procédé opérant la correction des différents paramètres de commande du moteur à partir de cette valeur.

Le procédé de commande selon l'invention concerne un moteur à combustion interne pour véhicule équipé d'une installation de climatisation du type comprenant un circuit fermé de fluide réfrigérant sur lequel est disposé un compresseur entraîné par le moteur par l'intermédiaire d'un système d'accouplement telle qu'une poulie à embrayage piloté, un condenseur associé à un premier groupe moto-ventilateur, un détendeur, un évaporateur associé à un second groupe moto-ventilateur, par lequel on détecte des signaux de commande de mise en service et d'arrêt de l'installation de climatisation et par lequel on ajuste en conséquence les paramètres de commande du moteur, tels que le débit d'admission d'air, la quantité de carburant injecté ou encore l'instant d'allumage des bougies, ainsi que les paramètres de commande de l'installation de climatisation tels que l'état embrayé ou débrayé de la poulie d'entraînement du compresseur et/ou le fonctionnement des groupes moto-ventilateurs.

Selon l'invention, le procédé de commande du moteur est caractérisé en ce que d'une part on détermine en continue une estimation de la puissance absorbée par l'installation de climatisation lorsqu'elle est en service et lorsque l'installation de climatisation est à l'arrêt, une estimation de la puissance qu'elle absorberait si on la mettait en service et en ce que d'autre part on corrige sitôt détecté le signal de mise en service de l'installation de climatisation les valeurs des paramètres de commande en fonction des valeurs prises par ladite estimation de la puissance absorbée par l'installation de climatisation suivant des stratégies adaptées.

On comprendra mieux les buts, aspects et avantages de la présente invention, d'après la description donnée ci-après d'un mode de réalisation de l'invention, ce mode de réalisation étant donné à titre d'exemple non limitatif, en se référant aux dessins annexés, dans lesquels :

- la figure 1 est une vue schématique d'un moteur à combustion de véhicule automobile équipé d'une installation de climatisation ;

- la figure 2 est une vue de détail en coupe partielle du moteur à combustion interne représenté à la figure 1 et de son dispositif de contrôle permettant la mise en oeuvre du procédé selon l'invention ;

- les figures 3 et 4 sont des chronogrammes utiles à l'explication du procédé de commande du moteur selon l'invention.

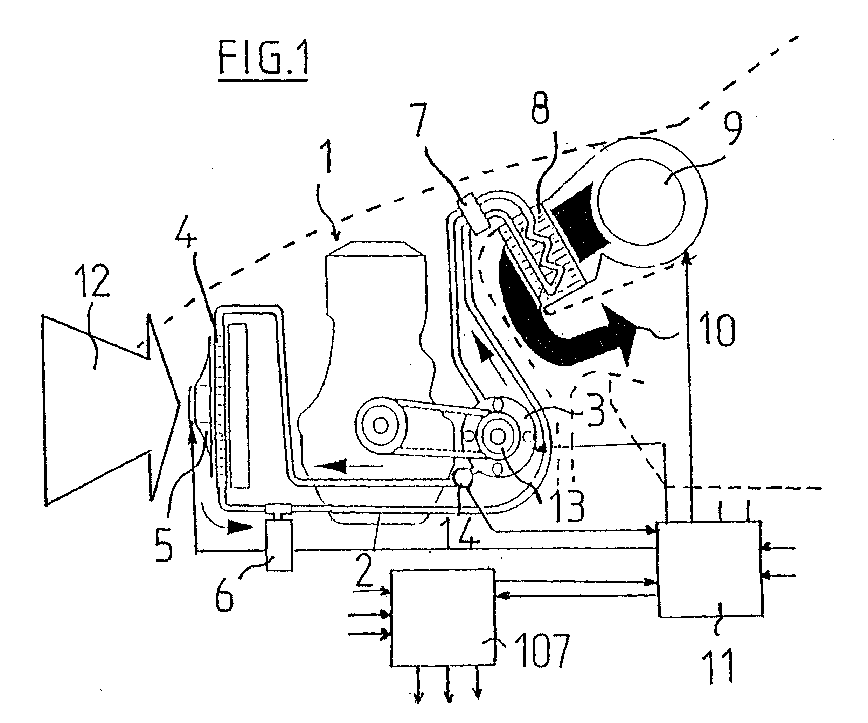

En se reportant sur la figure 1, on voit, présentée de façon simplifiée une installation de climatisation équipant un véhicule automobile. Cette installation est classiquement entraînée par le moteur à combustion interne référencé 1 du véhicule. Seules les parties constitutives nécessaires à la compréhension de l'invention ont été montrées.

L'installation de climatisation se compose d'un circuit 2 de fluide réfrigérant, tel que du Fréon (CFC) ou du Tetrafluoroéthane (HFC), en boucle fermée sur lequel sont disposés, dans cet ordre, un compresseur 3, un condenseur 4 associé à un premier groupe moto-ventilateur 5, un réservoir déshydrateur 6, un détendeur 7 et un évaporateur 8 associé à un second groupe moto-ventilateur 9. L'évaporateur 8 reçoit un flux d'air du second groupe moto-ventilateur pour produire un flux d'air climatisé 10 destiné à être envoyé dans l'habitacle du véhicule.

L'installation de climatisation comprend en outre un calculateur de climatisation 11 relié aux différents éléments de l'installation pour en piloter le fonctionnement en fonction de commandes réglées par l'utilisateur ainsi que de paramètres définis à l'avance. Le calculateur de climatisation 11 est également relié au calculateur d'injection 107 pour dialoguer avec ce dernier.

Le compresseur 3 qui est entraîné par le moteur à combustion interne 1, a pour fonction de comprimer le fluide réfrigérant de façon à le refouler sous haute pression. Entre le moteur à combustion interne et le compresseur est prévu un système d'accouplement sélectif réalisé sous la forme d'une poulie 13 à embrayage électromagnétique susceptible d'être commandée par le calculateur de climatisation 11, cette poulie 13 s'étendant entre l'arbre d'entraînement du compresseur 3 et la poulie moteur solidaire du vilebrequin sur laquelle est prélevée l'énergie mécanique.

Le compresseur 3 peut être à cylindrée fixe ou variable. Dans ce dernier cas, la cylindrée est asservie aux besoins ce qui permet de régulariser l'effort demandé au moteur. De même, le dispositif d'actionnement qui est à rapport d'entraînement constant dans l'exemple illustré, peut également être à rapport d'entraînement variable piloté par le calculateur de climatisation 11.

Le condenseur 4 sert à refroidir le fluide après sa compression, ainsi qu'à favoriser sa liquéfaction. Pour accentuer l'échange de chaleur durant la traversée du condenseur 4, on fait circuler de l'air sur cet échangeur, par écoulement naturel lorsque la voiture est en mouvement mais également et surtout à l'aide d'un premier groupe moto-ventilateur 5 dont le fonctionnement est asservi par le calculateur de climatisation 11.

Le réservoir déshydrateur 6 constitue une réserve de fluide en phase liquide et réalise notamment une fonction d'amortissement et de déshydratation.

Le détendeur 7 ou soupape de détente sert à réduire la pression du fluide à l'entrée de l'évaporateu 8 jusqu'à une valeur prédéterminée, de façon que le fluide se retrouve sous forme gazeux avant d'être aspiré par le compresseur 3.

Enfin, l'évaporateur 8 est un échangeur de chaleur tout comme le condenseur 4, mais il modifie l'état du fluide en sens inverse. Le fluide qui traverse l'évaporateur 8 va donc prélever des calories à la veine d'air 10 qui le balaye. Cette veine d'air est générée par le second groupe moto-ventilateur 9 dont le fonctionnement est piloté avec précision par le calculateur de climatisation 11. La température de l'habitacle du véhicule est, en effet, essentiellement contrôlée en ajustant le débit de l'air traversant l'évaporateur 8.

Le calculateur de climatisation 11, tout comme le calculateur d'injection 107, comprend classiquement un microprocesseur, des mémoires vives, des mémoires mortes, des convertisseurs analogiques-numériques ainsi que différentes interfaces d'entrées et de sorties.

Le microprocesseur du calculateur de climatisation 11 comporte des circuits électroniques et des logiciels appropriés pour traiter les signaux en provenance de différents capteurs adaptés et notamment un capteur de pression 14 apte à mesurer la haute pression du fluide à la sortie du compresseur 3, pour déterminer les états de l'installation de climatisation et mettre en oeuvre des opérations prédéfinies afin de générer des signaux de commande à destination notamment du mécanisme d'embrayage de la poulie 13 et des deux groupes moto-ventilateurs 5 et 9, en fonction des commandes réglées par l'utilisateur et notamment de la température de consigne habitacle programmée.

Le calculateur de climatisation 11 comporte par ailleurs des moyens de calcul appropriés pour élaborer selon le procédé objet de la présente invention, l'estimation de la puissance mécanique absorbée W par l'installation de climatisation, estimation qu'il doit transmettre en continue au calculateur d'injection 107 pour lui permettre d'ajuster en conséquence les paramètres de fonctionnement du moteur, comme cela va être détaillé ci-après.

Cette estimation de la puissance mécanique absorbée W par l'installation de climatisation est basée toute d'abord d'une détermination précise de la puissance Wc absorbée par le seul compresseur 3.

La détermination précise de la puissance Wc absorbée par le seul compresseur 3 est entièrement basée sur la connaissance de trois paramètres distincts caractéristiques de l'installation de climatisation que sont : la pression du fluide réfrigérant Pc en sortie de compresseur 3, la vitesse de rotation du compresseur Nc et le débit d'air De traversant l'évaporateur 8.

La Demanderesse a pu, en effet, vérifier qu'un modèle basé sur ces seuls trois paramètres permet de déterminer avec une précision encore inégalée la puissance absorbée par le compresseur 3 et ce, quelles que soient les conditions de fonctionnement de l'installation.

L'information Pc pression du fluide réfrigérant en sortie du compresseur 3 est fournie par le capteur 14. Comme montré sur l'unique figure 1, ce capteur de pression 14 est monté entre la sortie du compresseur 3 et l'entrée du condenseur 4. Il est toutefois parfaitement possible de placer le capteur 14 entre la sortie du condenseur 4 et l'entrée du détendeur 7.

La vitesse de rotation du compresseur Nc est soit fournie par un capteur spécifique ou de préférence recalculée à partir de l'information vitesse de rotation vilebrequin N fournie par le calculateur d'injection 107 puisque le compresseur 3 est entraîné depuis le vilebrequin du moteur 1 avec un rapport donné ; on a donc Nc = k.N où k est une constante égale au rapport de transmission.

Le débit d'air De traversant l'évaporateur 8 est lui directement déduit de la commande de vitesse générée par le calculateur de climatisation 11 lui-même au second groupe moto-ventilateur 9. En effet, pour un ventilateur donné le débit d'air généré est en effet directement lié à la vitesse de rotation des pales. Or la vitesse de rotation du second groupe moto-ventilateur est entièrement pilotée par le calculateur 11 et ce, avec une excellente précision puisque c'est cette vitesse qui conditionne la température du flux d'air 10 envoyé dans l'habitacle du véhicule.

La puissance du compresseur Wc est alors déduite de ces trois valeurs Pc, Nc et De, à travers des tables ou cartographies déterminées expérimentalement et adaptées à chaque installation de climatisation considérée. Ces tables réalisées de façon similaire à celles évoquées dans le document FR-A-2.711.731, sont stockées dans des mémoires du calculateur de climatisation 11.

Il suffit alors grâce à des moyens de lecture et éventuellement d'interpolation de venir lire automatiquement dans cette table la valeur correspondante de la puissance Wc, à chaque réception des valeurs instantanées Pc, Nc et De. Bien évidemment la taille de la cartographie est adaptée en fonction de la précision souhaitée. La prise en compte de ces trois paramètres permet toutefois avec un nombre relativement limité de valeurs mises en mémoire, de définir une représentation suffisamment précise pour permettre une évaluation satisfaisante de la puissance absorbée par le compresseur.

Il est également possible de déduire la puissance du compresseur Wc, des trois valeurs Pc, Nc (ou N) et De, à partir d'une formule du type Wc=p(Pc,Nc, De), où p est, par exemple, une fonction polynomiale dont les paramètres sont déterminés expérimentalement (par exemple par régression linéaire).

On peut ainsi avoir les formulations plus ou moins complexes suivantes la corrélation voulue :

(I) $Wc = (a.Pc) + (b.Nc) + (c.Pc.Nc) + (d.Pc.Nc.De)$ où a, b, c, d sont des constantes définies expérimentalement.

(II) $Wc = (a'.Pc^2.Nc) + (b'.Nc^3) + (c'.Pc.Nc^{2)}) + (d'.Pc) + (e'.Pc.Nc.De)$

où a', b', c', d', e' sont des constantes définies expérimentalement.

Le degré de complexité de la formulation retenue est un compromis en la précision voulue et les capacités de calcul du microprocesseur du calculateur de climatisation 11.

Pour être totalement précis dans le calcul de l'estimation de la puissance mécanique absorbée W par l'installation de climatisation selon la présente invention, il convient de ne pas limiter celle-ci à la seule puissance mécanique Wc absorbée par le compresseur 3, laquelle ne représente qu'une partie de la puissance mécanique prélevée sur l'arbre moteur par l'installation de climatisation. Il convient d'ajouter à la puissance mécanique absorbée par le compresseur Wc, les puissances Wgmv1 et Wgmv2 correspondantes aux fonctionnements respectifs des deux groupes moto-ventilateur 5 et 9, ces puissances étant absorbées par le générateur électrique du véhicule ou alternateur, non représenté, qui est également entraîné par le moteur.

Les puissances Wgmv1 et Wgmv2 absorbées par les deux groupes moto-ventilateurs sont loin d'être négligeables. Ainsi, pour une installation de climatisation donnée, si la puissance absorbée par le compresseur évolue entre 0 et 5 Kw, celle du premier groupe moto-ventilateur 5 évolue entre 0 et 1 Kw et celle du second groupe moto-ventilateur 9 évolue entre 0 et 0,5 Kw. Il en résulte donc que, la non prise en compte des puissances absorbées Wgmv1 et Wgmv2 respectivement par chacun des deux groupes moto-ventilateur 5 et 9, entraîne une erreur de plus de 20% sur la puissance totale absorbée par le fonctionnement de l'installation de climatisation.

Le calcul de ces puissances Wgmv1 et Wgmv2 est extrêmement aisé puisque directement déduit des régimes de rotation respectifs de chacun des groupes moto-ventilateurs, lesquels sont commandés par le calculateur de climatisation 11 lui-même. Il suffit donc de venir relire les valeurs de consigne qui sont régulièrement élaborées selon des stratégies adaptées pour obtenir après un calcul élémentaire la puissance absorbée correspondante.

Il en résulte donc la formulation générale suivante de l'estimation de la puissance absorbée par l'installation de climatisation :

$$W = Wc + Wgmv1 + Wgmv2$$

La valeur W ainsi définie est alors à même d'être calculée à des instants discrets déterminés mais de préférence en continue et ce, que l'installation de climatisation fonctionne ou qu'elle soit à l'arrêt. Lorsque l'installation est à l'arrêt, la valeur Wc est directement déduite des valeurs Pc et Nc=N réellement mesurées et de la valeur De élaborée par le calculateur 11 en fonction de la dernière température de consigne habitacle enregistrée, de la même façon les valeurs Wgmv1 et Wgmv2 sont extrapolées par le calculateur 11 en fonction de la dernière température de consigne habitacle enregistrée.

L'installation de climatisation et le calcul de l'estimation de la puissance absorbée par cette dernière ayant été décrits, nous allons maintenant présenter le procédé de commande du moteur élaboré pour exploiter au mieux cette information.

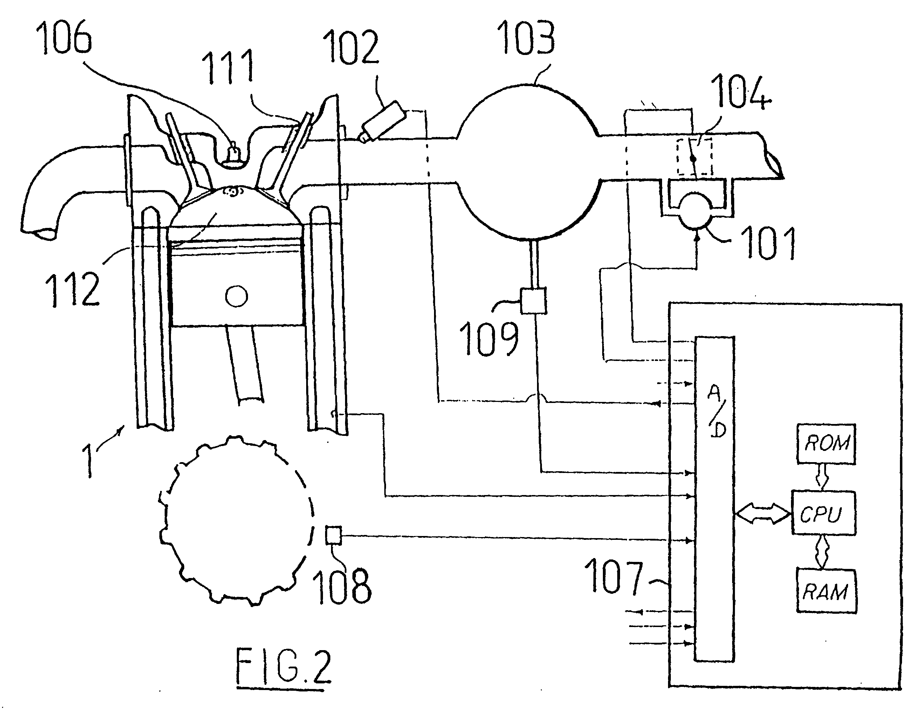

En se reportant à la figure 2, on voit de façon plus détaillée le moteur à combustion interne 1 entraînant l'installation de climatisation.

Ce moteur 1 qui dans l'exemple illustré est un moteur multicylindre à quatre temps et à allumage commandé, comprend un système d'admission d'air 103 alimentant les différentes chambres de combustion 112. Ce système d'admission est muni d'un papillon de réglage de la quantité d'air admis 104 et d'un circuit de bipasse coopérant avec une vanne pilotée 101 commandant un débit d'air additionnel, cette vanne étant adaptée pour contrôler précisément le débit d'air en phase de fonctionnement ralenti du moteur, lorsque le papillon 104 est fermé.

L'introduction de l'air d'admission dans les chambres de combustion 112 s'opère par l'ouverture des soupapes d'admission 111 dont la commande est opérée par un système de distribution adapté non figuré. L'injection du carburant s'effectue grâce à un ou plusieurs électro-injecteurs 102 alimentés depuis un réservoir non figuré par du carburant sous une pression adaptée et la combustion du mélange carburé remplissant les chambres de combustion est classiquement déclenchée par le système d'allumage à bougies 106.

L'ouverture de chaque électro-injecteur 102 ainsi que l'avance à l'allumage des bougies 106 ou encore l'ouverture de la vanne de régulation ralenti 101 sont directement commandées par le système électronique de contrôle ou calculateur d'injection 107.

Le calculateur d'injection 107 participe également au pilotage de l'installation de climatisation en adressant au calculateur 11 des demandes de suspension totale ou partielle du fonctionnement de l'installation de climatisation ou bien de maintien temporaire en service de la climatisation malgré une demande d'arrêt de cette dernière. Ces demandes adressées par le calculateur d'injection 107 au calculateur de climatisation 11 peuvent viser l'état embrayé ou débrayé de la poulie 13 du compresseur 3 ou bien encore l'actionnement des groupes moto-ventilateurs 5 et 9.

Dans le calculateur 107 sont mémorisés les formules et les paramètres fondamentaux pour le réglage optimal du moteur, ces paramètres étant obtenus préalablement au banc d'essai du moteur. Ce sont notamment les paramètres concernant l'instant de début d'injection ou phase d'injection du carburant dans chacune des chambres 112 du moteur, la durée d'injection de carburant qui correspond à une quantité de carburant injectée, ou bien encore la phase d'allumage des bougies 106, etc...

Le système électronique 107 comprend classiquement un microprocesseur ou unité centrale CPU, une- mémoire vive RAM, une mémoire morte ROM, des convertisseurs analogiques-numériques A/D, et différentes interfaces d'entrées et de sorties.

Le microprocesseur du calculateur d'injection 107 comporte des circuits électroniques et des logiciels appropriés pour traiter les signaux en provenance de différents capteurs adaptés, déterminer les états du moteur et mettre en oeuvre des opérations prédéfinies afin de générer des signaux de commande à destination notamment des injecteurs et des bobines d'allumage non figurées mais également à destination de l'installation de climatisation et notamment du calculateur 11 auquel il est relié, de façon à gérer au mieux les conditions de combustion dans les cylindres du moteur.

Parmi les signaux d'entrée du microprocesseur figurent les informations émanant du calculateur 11 et concernant les demandes de mise en service ou d'arrêt de l'installation de climatisation ainsi que la valeur de l'estimation de la puissance mécanique W prélevée par l'installation de climatisation qui lui est adressée par le calculateur de climatisation 11.

Conformément à la méthode mise en oeuvre par le calculateur de climatisation 11 pour opérer l'estimation de la puissance mécanique W absorbée par l'installation de climatisation, celui-ci est à même de calculer cette estimation en permanence et ce, indépendamment du fait que l'installation de climatisation soit réellement en fonctionnement ou non et donc indépendamment du fait que le compresseur 3 soit embrayé ou débrayé.

Ainsi, le calculateur d'injection dispose en permanence d'une estimation de la puissance réellement absorbée par l'installation de climatisation lorsque cette dernière est en service et lorsque l'installation de climatisation est à l'arrêt d'une estimation de la puissance qu'elle absorberait si on la mettait en service, ce qui permet alors d'anticiper les corrections à apporter aux paramètres de commande du moteur lors de la mise en service effective de l'installation de climatisation.

Cette information caractéristique de l'installation de climatisation est exploitée par le calculateur d'injection 107 dans des stratégies adaptées qui vont être détaillées ci-après.

Le microprocesseur du calculateur d'injection 107 reçoit également l'information fournie par un capteur de position vilebrequin 108. Ce capteur 108 du type par exemple à réluctance variable, est monté fixe sur le bâti du moteur pour être positionné devant une couronne de mesure correspondante fixée à une extrémité du vilebrequin.

Cette couronne est munie à sa périphérie d'une succession de dents et de creux identiques à l'exception d'une dent qui a été supprimée de façon à définir un repère absolu. Le capteur 108 délivre ainsi un signal au calculateur 107 correspondant au défilement des dents de la couronne, signal qui après traitement permet le repérage du passage au point mort haut de chacun des cylindres, et la détermination de la vitesse de rotation instantanée du moteur. Ces signaux permettent de phaser avec précision les instants d'injection avec le fonctionnement du moteur.

Parmi les autres signaux d'entrées pris en compte par le microprocesseur du calculateur d'injection 107, figurent notamment ceux émis par un capteur de pression 109 équipant le système d'admission d'air 103 du moteur disposé en aval du papillon 104, ainsi que ceux émis par des capteurs non figurés de mesure de la richesse du mélange carburé, de mesure de la température du liquide de refroidissement ainsi que de l'air d'admission, etc.

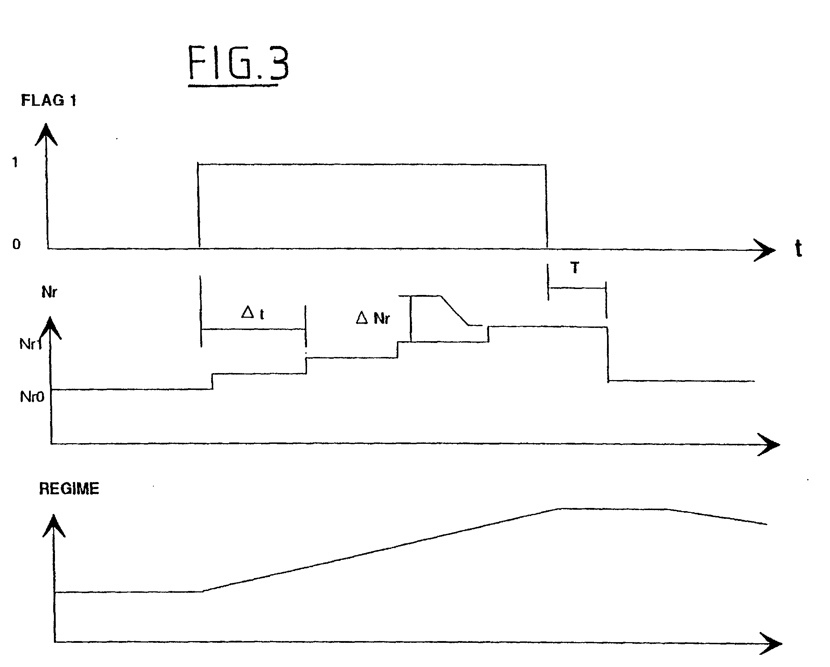

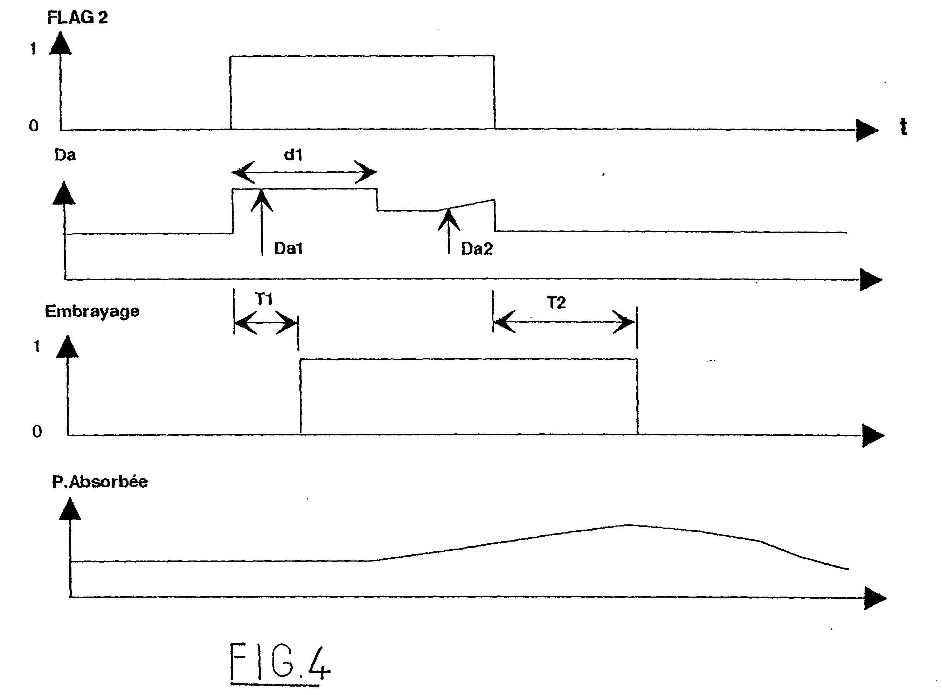

Conformément à ce qui vient d'être décrit et en se reportant aux figures 3 et 4, on va développer maintenant le procédé de commande objet de la présente invention.

Celui-ci consiste à corriger en fonction de la valeur de la puissance mécanique W absorbée par l'installation de climatisation, les valeurs des paramètres de commande du moteur, tels que le débit d'admission d'air, la quantité de carburant injecté ou encore l'instant d'allumage des bougies, ainsi que les paramètres de commande de l'installation de climatisation tels que l'état embrayé ou débrayé de la poulie d'entraînement du compresseur ou encore l'actionnement des groupes moto-ventilateurs 5 et 9.

Le calculateur d'injection 107 disposant en permanence d'une information fiable et précise sur la puissance mécanique W que l'installation de climatisation absorbe réellement ou que celle-ci absorberait sitôt sa mise en service, il peut alors mettre en oeuvre des stratégies de correction des paramètres de commande du moteur 1 ou bien encore retarder l'embrayage de la poulie 13, lorsque les conditions de fonctionnement du moteur l'exige.

Parmi les différentes phases de fonctionnement du moteur concernées par le procédé objet de l'invention figure plus particulièrement la phase de fonctionnement ralenti.

Classiquement, lorsque la phase de fonctionnement ralenti est identifiée, en général par la position pied levé de la pédale d'accélérateur et un régime de rotation N du moteur inférieur à un seuil donné, le calculateur d'injection 107 procède à la régulation du régime de rotation du moteur N en asservissant ce régime à une valeur donnée de consigne Nr. Cette régulation est généralement opérée par ajustement du débit d'air d'admission en commandant l'ouverture de la vanne de régulation ralenti 101.

La présente invention consiste donc en phase de fonctionnement ralenti et en phase de fonctionnement de l'installation de climatisation, à corriger en permanence la vitesse de rotation de consigne Nr, par calcul ou par lecture dans des tables, en fonction de la puissance mécanique absorbée W par l'installation de climatisation.

On a ainsi une relation du type : Nr = No + f (W), où No est le régime de ralenti nominal en l'absence de fonctionnement de l'installation de climatisation et où f est un coefficient correcteur additif qui est fonction de la puissance absorbée W, cette fonction étant de type monotone croissante.

Grâce à la prise en compte de la puissance réellement absorbée par l'installation de climatisation, il n'est donc plus nécessaire d'augmenter le régime de consigne Nr sitôt la mise en service effective de l'installation de climatisation mais uniquement si la puissance absorbée l'exige. Par ailleurs, si cette puissance évolue avec le temps, il en est de même de la valeur de consigne Nr contrairement à l'art antérieur.

La consigne de régime Nr n'est pas modifiée brutalement mais de façon progressive de façon à être quasiment imperceptible et éviter tout phénomène d'à-coups.

Le calculateur 107 commande donc de façon progressive le passage d'une première valeur de consigne Nr1 à une seconde valeur de consigne Nr2 selon une loi adaptée fonction de l'écart entre les deux valeurs.

La figure 3 illustre une telle augmentation progressive. La première ligne montre l'état d'un booléen FLAG1 caractéristique d'une demande d'accélération du régime de rotation du moteur suite à une évolution de la puissance réellement absorbée par l'installation de climatisation, celle-ci passant par exemple de la valeur W0 à la valeur W1 suite à l'embrayage de la poulie 13 et/ou à l'actionnement de l'un et ou l'autre des groupes moto-ventilateurs 5 et 9.

La deuxième ligne de la figure 3 montre l'évolution correspondante de la valeur de consigne Nr qui évolue donc progressivement de la valeur Nr0 à la valeur Nr1 par des paliers sensiblement identiques dé durée Δt et d'amplitude ΔNr. La durée de chaque palier Δt la valeur d'incrémentation du régime ΔNr sont préalablement calibrées et évoluent de préférence directement selon la valeur de l'écart entre Nr0 et Nr1.

Il est à noter par ailleurs que la disparition de la demande d'augmentation du régime de consigne suite au retour de la puissance de la valeur W1 à la valeur W0, peut être temporisée selon une valeur de temporisation T calibrée et que le retour à la valeur de consigne Nr0 peut ne pas être progressif.

La troisième ligne de la figure 3 montre l'évolution correspondante du régime de rotation instantané N du moteur.

Indépendamment de la correction du régime de consigne ralenti Nr utilisé dans la boucle de régulation ralenti et plus particulièrement destinée à améliorer les performances de l'installation de climatisation, le calculateur d'injection 107 opère des corrections dites en boucle ouverte, de la commande de la vanne 101 et donc du débit d'air ralenti et ce, afin d'améliorer la réponse du système de régulation et donc les performances du moteur.

Ces corrections du débit d'air sont représentées à la figure 4.

La première ligne montre l'état d'un booléen FLAG2 caractéristique d'une demande de mise en service de l'installation de climatisation. Sitôt la demande de mise en service de l'installation identifiée (passage à la valeur 1 du booléen FLAG2), on procède alors, avant d'opérer cette mise en service effective qui se traduit par l'embrayage de la poulie 13 et/ou l'actionnement des groupes moto-ventilateurs 5 ou 9, à une première correction de la valeur du débit d'admission d'air Da, qui passe de la valeur Dao à la valeur Da1, en pilotant la vanne de régulation ralenti 101.

Cette première correction représentée à la deuxième ligne de la figure 4, est mise en oeuvre aussitôt le changement de valeur du booléen FLAG2 et pendant une durée prédéterminée d1. Elle est déterminée par calcul ou par lecture dans des tables en fonction des valeurs prises par de la grandeur W fournissant l'estimation de la puissance mécanique que va absorber l'installation de climatisation lors de sa mise en service effective et ce, de façon que l'embrayage effectif de la poulie d'entraînement 13 du compresseur 3 et/ou l'actionnement des groupes moto-ventilateurs n'engendrent pas d'à-coups.

Cette correction est donc du type : Da1 = Dao + g(W) où Dao est le débit d'air nominal en l'absence de fonctionnement de l'installation de climatisation et où g est un coefficient correcteur additif fonction de la puissance absorbée W, cette fonction étant de type monotone croissante.

Après que la première correction du débit d'air et l'installation de climatisation ayant été effectivement mise en service, on opère alors à une seconde correction de la valeur de commande de la vanne de régulation ralenti 101 afin de porter le débit d'admission d'air à une valeur Da2, valeur ajustée pour compenser la charge de l'installation de climatisation et faciliter le fonctionnement de la boucle fermée de régulation de la vitesse de rotation du moteur N à la valeur de consigne Nr déterminée selon la procédure précitée. Cette seconde correction qui est sensiblement de moindre ampleur que la première correction est également déterminée par calcul ou par lecture dans des tables en fonction des valeurs prises par l'estimation de la puissance mécanique absorbée réellement par l'installation de climatisation.

Cette seconde correction peut donc également s'écrire sous la forme : Da2 = Dao + h(W) où h est un coefficient correcteur additif fonction de la puissance absorbée W, cette fonction étant de type monotone croissante. Bien évidemment, cette seconde correction est à même d'évoluer au cours du temps en parallèle à l'évolution de la valeur W.

La troisième ligne de la figure 4 concerne le fonctionnement de l'installation de climatisation et plus particulièrement représente la commande de l'état Eb embrayé de la poulie 13 qui se trouve donc retardée, parallèlement à la correction temporaire de la valeur du débit d'admission d'air Da.

Le retard T1 dans la mise en service effective de l'installation de climatisation, qui se traduit dans l'exemple illustré par le maintien à l'état débrayé de la poulie d'entraînement 13 du compresseur 3, est déterminé par le calculateur d'injection 107 par calcul ou par lecture dans des tables en fonction des valeurs prises par l'estimation de la puissance mécanique absorbée W par l'installation de climatisation. Ce retard est ensuite adressé au calculateur 11 qui gère le fonctionnement de l'installation de climatisation.

La quatrième ligne du graphique de la figure 4 montre l'évolution correspondante de la puissance absorbée.

Lorsque la demande d'arrêt de l'installation de climatisation a été détectée, on annule tout d'abord la correction portant sur la commande de la vanne de régulation ralenti 101 pour ramener le débit d'air à sa valeur nominale Dao correspondant à l'arrêt de l'installation de climatisation. Ce retour peut être brutal ou encore opéré selon une loi adaptée fonction de l'estimation de la puissance absorbée par la climatisation.

L'arrêt effectif de l'installation de climatisation et notamment le débrayage effectif de la poulie d'entraînement 13 du compresseur 3, est retardé pendant une durée T2 adaptée, déterminée également par calcul ou par lecture dans des tables en fonction des valeurs prises par W, de façon que cet arrêt s'opère sans à-coups.

Parallèlement aux corrections apportées sur la régulation du régime de rotation et au débit d'air traversant la vanne 101, l'estimation de la puissance mécanique W de l'installation de climatisation est également utilisée pour corriger la valeur de l'avance à l'allumage Av.

Ainsi, l'avance à l'allumage Av, qui est commandée initialement à une valeur Avo nominale prédéterminée lorsque l'installation de climatisation est à l'arrêt, est corrigée lors du fonctionnement de l'installation de climatisation. La correction, s'opère dans le sens d'une augmentation de l'avance fonction de la valeur de la puissance mécanique absorbée par l'installation de climatisation.

Cette correction s'exprime de façon parfaitement similaire avec les stratégies de correction précédentes sous la forme : Av = Avo + s(W), avec s qui est un coefficient correcteur additif fonction de la puissance absorbée W, cette fonction étant de type monotone croissante. Le coefficient correcteur d'avance s(W) est directement calculé ou bien encore lu dans des tables, en fonction des valeurs prises par W.

Indépendamment de la phase de fonctionnement ralenti, le procédé selon l'invention s'applique également aux autres phases de fonctionnement du moteur et notamment aux phases dites transitoires de décélération ou encore aux phases de fonctionnement à fortes charges.

Les transitoires de décélération sont caractérisés d'une part, par le maintien de la pédale d'accélérateur dans la position pied levé et d'autre part, par une vitesse du véhicule automobile et un régime de rotation du moteur supérieures à des valeurs de seuil prédéterminées, respectivement Sdéc1 et Sdéc2. Pendant de telles phases de fonctionnement, le calculateur d'injection 107 opère classiquement une coupure de l'injection de carburant.

Selon l'invention, la stratégie de commande des paramètres moteur pendant de telles phases de fonctionnement, consiste en cas de fonctionnement de l'installation de climatisation à corriger les valeurs de seuil Sdéc1 et Sdéc2 par calcul ou par lecture dans des tables, en fonction de l'estimation de la puissance mécanique absorbée W par l'installation de climatisation.

De même, lors des phases de fonctionnement à forte charge et bas régime, la stratégie retenue consiste en cas de fonctionnement de l'installation de climatisation à suspendre totalement ou partiellement le fonctionnement effectif de cette installation tant que la puissance absorbée W excède une valeur adaptée.

Ainsi, grâce au procédé selon l'invention la précision dans l'estimation de la puissance absorbée par l'installation de climatisation permet au calculateur d'injection 107 d'élaborer des stratégies très précisés et d'ajuster en conséquence les paramètres de commande du moteur quelles que soient les conditions de fonctionnement du moteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi, l'information caractéristique de l'énergie prélevée par l'installation de climatisation sur le moteur, information adressée par le calculateur de climatisation 11 au calculateur d'injection 107, peut être présentée comme cela a été décrit ci-dessus sous la forme d'une puissance W, elle peut également être présentée sous la forme d'un couple C. Le passage de l'une à l'autre est simple puisqu'il suffit de multiplier ou de diviser par le régime de rotation.

Ainsi, les moyens de mises en oeuvre du procédé peuvent non pas être directement intégrés au calculateur de climatisation 11, mais directement intégrés dans le calculateur d'injection 107, ce dernier recevant alors simplement du calculateur de climatisation 11 l'ensemble des informations nécessaires, à savoir la pression Pc et les régimes de rotation des deux groupes moto-ventilateurs.

## Revendications

1. Procédé pour estimer la puissance absorbée par le compresseur (3) d'une installation de climatisation équipant un véhicule à moteur (1) du type comprenant un circuit fermé de fluide réfrigérant (2) sur lequel est disposé ledit compresseur (3), un condenseur (4) associé à un premier groupe moto-ventilateur (5), un détendeur (7), un évaporateur (8) associé à un second groupe moto-ventilateur (9) et un calculateur de climatisation (11) contrôlant le fonctionnement de l'installation de climatisation en fonction de commandes réglées par l'utilisateur, ledit procédé comprenant des étapes d'acquisition des valeurs prises par des informations liées au fonctionnement de ladite installation de climatisation et des étapes de calcul ou de lecture dans des tables de ladite puissance absorbée en fonction desdites valeurs, lesdites informations comprennent :

   - la haute pression (Pc) en sortie de compresseur (3) ;
   - la vitesse de rotation (Nc) du compresseur (3), **caractérisé en ce que** lesdites informations comprennent également le débit d'air (De) traversant l'évaporateur (8).

2. Procédé pour estimer la puissance absorbée par le compresseur (3) d'une installation de climatisation selon la revendication 1, **caractérisé en ce que** la vitesse de rotation (Nc) du compresseur (3) est tirée de la vitesse de rotation (N) du vilebrequin du moteur (1).

3. Procédé pour estimer la puissance absorbée par le compresseur (3) d'une installation de climatisation selon l'une quelconque des revendications 1 à 2, **caractérisé en ce que** le débit d'air (De) traversant l'évaporateur (8) est tiré de la vitesse de rotation du second groupe moto-ventilateur (9).

4. Procédé pour estimer la puissance absorbée par le compresseur (3) d'une installation de climatisation selon la revendication 3, **caractérisé en ce que** la vitesse de rotation du second groupe moto-ventilateur (9) est commandée par le calculateur de climatisation (11) selon les commandes réglées par l'utilisateur de l'installation de climatisation et des stratégies prédéfinies.

5. Procédé pour estimer la puissance absorbée par le compresseur (3) d'une installation de climatisation selon l'une quelconque des revendications 1 à 4, **caractérisé en ce que** la haute pression (Pc) en sortie de compresseur (3) est mesurée en un point quelconque du circuit de fluide réfrigérant (2) entre la sortie dudit compresseur (3) et l'entrée dudit détendeur (7).

6. Procédé pour estimer la puissance absorbée par une installation de climatisation équipant un véhicule à moteur (1) du type comprenant un circuit fermé de fluide réfrigérant (2) sur lequel est disposé un compresseur (3), un condenseur (4) associé à un premier groupe moto-ventilateur (5), un détendeur (7), un évaporateur (8) associé à un second groupe moto-ventilateur (9) et un calculateur de climatisation (11) contrôlant le fonctionnement de l'installation de climatisation en fonction de commandes réglées par l'utilisateur, **caractérisé en ce que** ladite puissance absorbée par l'installation de climatisation correspond à la puissance absorbée par le seul compresseur (3) et **en ce que** ladite puissance absorbée par le seul compresseur (3) est obtenue selon le procédé objet des revendications 1 à 5.

7. Procédé pour estimer la puissance absorbée par une installation de climatisation selon la revendication 6, **caractérisé en ce qu'**on ajoute à la puissance absorbée par le seul compresseur (3), la puissance absorbée par ledit premier groupe . moto-ventilateur (5) et/ou la puissance absorbée par ledit second groupe moto-ventilateur (9).

8. Procédé pour estimer la puissance absorbée par une installation de climatisation selon la revendication 7, **caractérisé en ce que** la puissance absorbée par chacun des groupes moto-ventilateurs (5; 9) est tirée de la vitesse de rotation dudit groupe moto-ventilateur.

9. Procédé pour estimer la puissance absorbée par une installation de climatisation selon la revendication 8, **caractérisé en ce que** la vitesse de rotation de chacun des groupes moto-ventilateur (5;9) est commandée par le calculateur de climatisation (11) selon les commandes réglées par l'utilisateur de l'installation de climatisation et des stratégies prédéfinies.

10. Procédé de commande d'un moteur (1) à combustion interne pour véhicule équipé d'une installation de climatisation du type comprenant un circuit fermé de fluide réfrigérant (2) sur lequel est disposé un compresseur (3) entraîné par le moteur par l'intermédiaire d'un système d'accouplement telle qu'une poulie à embrayage piloté (13), un condenseur (4) associé à un premier groupe moto-ventilateur (5), un détendeur (7), un évaporateur (8) associé à un second groupe moto-ventilateur (9), par lequel on détecte des signaux de commande de mise en service et d'arrêt de l'installation de climatisation et par lequel on ajuste en conséquence les paramètres de commande du moteur, tels que le débit d'admission d'air (Da), la quantité de carburant injecté (Ti) ou encore l'instant d'allumage des bougies (Av), ainsi que les paramètres de commande de l'installation de climatisation tels que l'état (Eb) embrayé ou débrayé de la poulie d'entraînement (13) du compresseur (3) et/ou le fonctionnement des groupes moto-ventilateurs (5,9) et au course duquel, on détermine en continu une estimation (W) de la puissance absorbée par l'installation de climatisation lorsqu'elle est en service, **caractérisé en ce que** lorsque l'installation de climatisation est à l'arrêt, une estimation de la puissance qu'elle absorberait si on la mettait en service et **en ce que** d'autre part, on corrige sitôt détecté le signal de mise en service de l'installation de climatisation, suivant des stratégies adaptées, les valeurs des paramètres de commande (Da,Ti,Av,Eb) en fonction des valeurs prises par ladite estimation (W) de la puissance absorbée par l'installation de climatisation.

11. Procédé de commande d'un moteur selon la revendication 10, **caractérisé en ce que** l'on calcule ou **en ce que** l'on vient lire dans des tables les valeurs de ladite estimation (W) de la puissance absorbée par l'installation de climatisation, en fonction des valeurs de la pression (Pc) en sortie de compresseur (3), de la vitesse de rotation du moteur (N), du débit d'air (De) traversant l'évaporateur (8) et éventuellement des régimes de rotation des groupes moto-ventilateurs (5,9).

12. Procédé de commande d'un moteur selon l'une quelconque des revendications 10 à 11, **caractérisé en ce qu'**en phase de fonctionnement ralenti, le débit d'admission d'air (Da) est commandé de façon à opérer l'asservissement de la vitesse de rotation du moteur (N) à une valeur de consigne (Nr) prédéterminée et **en ce que** lors de la mise en service de l'installation de climatisation, ladite valeur du régime de consigne (Nr) est corrigée, par calcul ou par lecture dans des tables, en fonction des valeurs prises par ladite estimation (W) de la puissance absorbée par l'installation de climatisation.

13. Procédé de commande d'un moteur selon la revendication 12, **caractérisé en ce en ce que** l'on commande de façon progressive le passage d'une première valeur de consigne (Nr0) à une seconde valeur de consigne (Nr1), ledit passage s'opérant selon une loi adaptée fonction de l'écart entre les deux valeurs.

14. Procédé de commande d'un moteur selon l'une quelconque des revendications 12 à 13, **caractérisé en ce que** si l'on détecte le signal de commande de mise en service de l'installation de climatisation en phase de fonctionnement ralenti, on opère une première correction (Da1) aussitôt et pendant une durée prédéterminée de la valeur du débit d'admission d'air (Da) commandée, ladite première correction étant déterminée par calcul ou par lecture dans des tables en fonction des valeurs prises par ladite estimation (W) de la puissance absorbée par l'installation de climatisation de façon que la mise en service effective de l'installation de climatisation s'opère sans à-coups.

15. Procédé de commande d'un moteur selon la revendication 14, **caractérisé en ce qu'**après avoir opérée ladite première correction (Da1) de la valeur du débit d'admission d'air (Da) commandée, on opère une seconde correction (Da2) de la valeur du débit d'admission d'air commandée, ladite seconde correction dite de boucle ouverte étant déterminée par calcul ou par lecture dans des tables en fonction des valeurs prises par ladite estimation (W) de la puissance absorbée par l'installation de climatisation de façon à faciliter le fonctionnement de la boucle fermée d'asservissement de la vitesse de rotation du moteur (N) à la valeur de consigne (Nc) prédéterminée.

16. Procédé de commande d'un moteur selon l'une quelconque des revendications 14 à 15, **caractérisé en ce que** parallèlement à la correction temporaire de la valeur du débit d'admission d'air (Da) commandée, on retarde la mise en service effective de l'installation de climatisation pendant une durée déterminée par calcul ou par lecture dans des tables en fonction des valeurs prises par ladite estimation (W) de la puissance absorbée par l'installation de climatisation.

17. Procédé de commande d'un moteur selon l'une quelconque des revendications 12 à 16, **caractérisé en ce que** si l'on détecte le signal de commande de l'arrêt de l'installation de climatisation en phase de fonctionnement ralenti, on corrige aussitôt et pendant une durée prédéterminée la valeur du débit d'admission d'air (Da) commandée, par calcul ou par lecture dans des tables en fonction des valeurs prises par ladite estimation (W) de la puissance absorbée par l'installation de climatisation, de façon que l'arrêt de l'installation de climatisation s'opère sans à-coups.

18. Procédé de commande d'un moteur selon la revendication 17, **caractérisé en ce que** parallèlement à la correction temporaire de la valeur du débit d'admission d'air (Da) commandée, on retarde l'arrêt effectif de l'installation de climatisation pendant une durée déterminée par calcul ou par lecture dans des tables en fonction des valeurs prises par ladite estimation (W) de la puissance absorbée par l'installation de climatisation.

19. Procédé de commande d'un moteur selon l'une quelconque des revendications 12 à 18, **caractérisé en ce qu'**en phase de fonctionnement ralenti, l'avance à l'allumage (Av) est commandée selon une valeur prédéterminée et **en ce que** lors du fonctionnement de l'installation de climatisation, on corrige la valeur de l'avance à l'allumage (Av) à commander par calcul ou par lecture dans des tables, en fonction des valeurs prises par ladite estimation (W) de la puissance absorbée par l'installation de climatisation.

20. Procédé de commande d'un moteur selon l'une quelconque des revendications 10 à 19, **caractérisé en ce qu'**on interrompt l'injection de carburant en phase de décélération du moteur, ladite phase de décélération étant déterminée d'une part, par le maintien de la pédale d'accélérateur dans la position pied levé et d'autre part, par des vitesses du véhicule automobile et du moteur supérieures à des valeurs de seuil prédéterminées (Sdéc1,Sdéce2) et, **en ce que** lors du fonctionnement de l'installation de climatisation, lesdites valeurs de seuil sont corrigées par calcul ou par lecture dans des tables, en fonction des valeurs prises par ladite estimation (W) de la puissance absorbée par l'installation de climatisation

21. Procédé de commande d'un moteur selon l'une quelconque des revendications 10 à 20, **caractérisé en ce qu'**en phase de fonctionnement du moteur sous forte charge et bas régime, on commande la suspension du fonctionnement de l'installation de climatisation en fonction des valeurs prises par ladite estimation (W) de la puissance absorbée par l'installation de climatisation.

**Patentansprüche**

1. Verfahren zur Abschätzung der Leistungsaufnahme des Kompressors (3) einer Klimaanlage, die zur Ausstattung eines Kraftfahrzeuges (1) gehört und bauartgemäß einen geschlossenen Kühlflüssigkeitskreislauf (2) aufweist, in welchem der genannte Kompressor (3), ein mit einer ersten Lüftermotorgruppe (5) verbundener Kondensator (4), ein Drosselorgan (7), ein mit einer zweiten Lüftermotorgruppe (9) verbundener Verdampfer (8) und ein Klimatisierungsrechner (11), der die Funktion der Klimaanlage in Abhängigkeit von verschiedenen durch den Bediener vorgenommenen Eingaben steuert, angeordnet sind, wobei das genannte Verfahren Schritte zur Erfassung der Werte, die anhand von mit der Funktion der genannten Klimaanlage verknüpften Informationen ermittelt werden, sowie Schritte zum Berechnen oder zum Lesen von Tabellen der genannten Leistungsaufnahme in Abhängigkeit von den genannten Werten aufweist und die genannten Informationen

   - den Hochdruck (Pc) am Ausgang des Kompressors (3) und
   - die Drehzahl (Nc) des Kompressors (3) beinhalten,

   **dadurch gekennzeichnet, daß** zu den genannten Informationen ferner

   x die Luftmenge (De) gehört, die den Verdampfer (8) durchströmt.

2. Verfahren zur Abschätzung der Leistungsaufnahme des Kompressors (3) einer Klimaanlage gemäß Anspruch 1, **dadurch gekennzeichnet, daß** die Drehzahl (Nc) des Kompressors (3) aus der Drehzahl (N) der Antriebswelle des Motors (1) abgeleitet wird.

3. Verfahren zur Abschätzung der Leistungsaufnahme des Kompressors (3) einer Klimaanlage gemäß einem oder mehreren der Ansprüche 1 bis 2, **dadurch gekennzeichnet, daß** die den Verdampfer (8) durchströmende Luftmenge (De) aus der Drehzahl der zweiten Lüftermotorgruppe (9) abgeleitet wird.

4. Verfahren zur Abschätzung der Leistungsaufnahme des Kompressors (3) einer Klimaanlage gemäß Anspruch 3, **dadurch gekennzeichnet, daß** die Drehzahl der zweiten Lüftermotorgruppe (9) durch den Klimatisierungsrechner (11) in Abhängigkeit von verschiedenen durch den Bediener der Klimaanlage vorgenommenen Eingaben sowie von zuvor festgelegten Strategien gesteuert wird.

5. Verfahren zur Abschätzung der Leistungsaufnahme des Kompressors (3) einer Klimaanlage gemäß einem oder mehreren der Ansprüche 1 bis 4, **dadurch gekennzeichnet, daß** der Hochdruck (Pc) am Ausgang des Kompressors (3) an einem beliebigen Punkt des Kühlflüssigkeitskreislaufs (2) zwischen dem genannten Ausgang des Kompressors (3) und dem Eingang des genannten Drosselorgans (7) gemessen wird.

6. Verfahren zur Abschätzung der Leistungsaufnahme einer Klimaanlage, die zur Ausstattung eines Kraftfahrzeuges (1) gehört und bauartgemäß einen geschlossenen Kühlflüssigkeitskreislauf (2) aufweist, in welchem ein Kompressor (3), ein mit einer ersten Lüftermotorgruppe (5) verbundener Kondensator (4), ein Drosselorgan (7), ein mit einer zweiten Lüftermotorgruppe (9) verbundener Verdampfer (8) und ein Klimatisierungsrechner (11), der die Funktion der Klimaanlage in Abhängigkeit von verschiedenen durch den Bediener vorgenommenen Eingaben steuert, angeordnet sind, **dadurch gekennzeichnet, daß** die genannte Leistungsaufnahme der Klimaanlage der von dem einzelnen Kompressor (3) aufgenommenen Leistung entspricht, sowie dadurch, daß die von dem einzelnen Kompressor (3) aufgenommene Leistung nach dem in den Ansprüchen 1 bis 5 beschriebenen Verfahren ermittelt wird.

7. Verfahren zur Abschätzung der Leistungsaufnahme einer Klimaanlage gemäß Anspruch 6, **dadurch gekennzeichnet, daß** zu der von dem einzelnen Kompressor (3) aufgenommenen Leistung die von der genannten ersten Lüftermotorgruppe (5) aufgenommene Leistung und/oder die von der genannten zweiten Lüftermotorgruppe (9) aufgenommene Leistung addiert wird.

8. Verfahren zur Abschätzung der Leistungsaufnahme einer Klimaanlage gemäß Anspruch 7, **dadurch gekennzeichnet, daß** die Leistungsaufnahme jeder der beiden Lüftermotorgruppen (5, 9) aus der Drehzahl der genannten Lüftermotorgruppe abgeleitet wird.

9. Verfahren zur Abschätzung der Leistungsaufnahme einer Klimaanlage gemäß Anspruch 8, **dadurch gekennzeichnet, daß** die Drehzahl jeder der beiden Lüftermotorgruppen (5, 9) vom Klimatisierungsrechner (11) in Abhängigkeit von verschiedenen durch den Bediener der Klimaanlage vorgenommenen Eingaben sowie von zuvor festgelegten Strategien gesteuert wird.

10. Verfahren zur Steuerung eines Verbrennungsmotors (1) für ein Kraftfahrzeug, das mit einer Klimaanlage ausgestattet ist, die bauartgemäß einen geschlossenen Kühlflüssigkeitskreislauf (2) aufweist, in welchem ein Kompressor (3) angeordnet ist, der über ein Kupplungssystem so angetrieben wird, daß eine Riemenscheibe mit einrückbarer Kupplung (13), ein mit einer ersten Lüftermotorgruppe (5) verbundener Kondensator (4), ein Drosselorgan (7), ein mit einer zweiten Lüftermotorgruppe (9) verbundener Verdampfer (8), über welchen Steuersignale zur In- und Außerbetriebnahme der Klimaanlage registriert werden, über welchen folglich die Motor-Steuerparameter wie z.B. die zugeführte Luftmenge (Da), die eingespritzte Kraftstoffmenge (Ti) oder auch der Zündzeitpunkt der Zündkerzen (Av) sowie Einstellparameter für die Klimaanlage wie z.B. den ein- oder ausgerückten Zustand (Eb) der Antriebsscheibe (11) des Kompressors (3) und/oder die Funktion der Lüftermotorgruppen (5, 9) eingestellt werden, wobei kontinuierlich eine Abschätzung (W) der von der Klimaanlage während ihres Betriebes aufgenommenen Leistung ermittelt wird, **dadurch gekennzeichnet, daß** immer dann, wenn die Klimaanlage ausgeschaltet ist, eine Abschätzung der Leistung erfolgt, die sie aufnehmen würde, wenn sie in Betrieb gesetzt würde, sowie dadurch, daß andererseits unmittelbar nach Registrierung des Signals zum Einschalten der Klimaanlage die Werte der Betriebsparameter (Da, Ti, Av, Eb) in Abhängigkeit von den durch die genannte Abschätzung (W) der von der Klimaanlage aufgenommenen Leistung erfaßten Werten nach geeigneten Strategien korrigiert werden.

11. Verfahren zur Steuerung eines Motors gemäß Anspruch 10, **dadurch gekennzeichnet, daß** die Werte der genannten Abschätzung (W) der von der Klimaanlage während ihres Betriebes aufgenommenen Leistung berechnet oder aus Tabellen gelesen werden, und zwar in Abhängigkeit von den Werten des Druckes (Pc) am Ausgang des Kompressors (3), von der Drehzahl des Motors (N), von der Luftmenge (De), die den Verdampfer (8) durchströmt und gegebenenfalls von den Drehzahlen der Lüftermotorgruppen (5, 9).

12. Verfahren zur Steuerung eines Motors gemäß einem oder mehreren der Ansprüche 10 bis 11, **dadurch gekennzeichnet, daß** während des Leerlaufs die zugeführte Luftmenge (Da) so reguliert wird, daß dadurch die Steuerung der Drehzahl des Motors (N) auf einen zuvor festgelegten Standardwert (Nr) eingestellt wird, sowie dadurch, daß bei Inbetriebnahme der Klimaanlage der genannte Drehzahl-Standardwert (Nr) durch Berechnen oder durch Ablesen aus den Tabellen in Abhängigkeit von den Werten korrigiert wird, die durch die genannte Abschätzung (W) der von der Klimaanlage während ihres Betriebes aufgenommenen Leistung ermittelt wurden.

13. Verfahren zur Steuerung eines Motors gemäß Anspruch 12, **dadurch gekennzeichnet, daß** schrittweise der Übergang von einem ersten Sollwert (Nr0) zu einem zweiten Sollwert (Nr1) eingestellt wird, wobei sich der genannte Übergang nach einer Gesetzmäßigkeit vollzieht, die sich aus der Differenz zwischen den beiden Werten ableitet.

14. Verfahren zur Steuerung eines Motors gemäß einem oder mehreren der Ansprüche 12 bis 13, **dadurch gekennzeichnet, daß** bei Erkennung des Steuersignals für die Inbetriebnahme der Klimaanlage während des Leerlaufs sofort und während einer zuvor festgelegten Dauer eine erste Korrektur (Da1) des Wertes der eingestellten zugeführten Luftmenge (Da) vorgenommen wird, wobei die genannte Korrektur durch Berechnen oder durch Ablesen aus den Tabellen in Abhängigkeit von den durch die genannte Abschätzung (W) der von der Klimaanlage aufgenommenen Leistung so ermittelt wird, daß die effektive Inbetriebnahme der Klimaanlage ruckfrei verläuft.

15. Verfahren zur Steuerung eines Motors gemäß Anspruch 14, **dadurch gekennzeichnet, daß** nach Ausführung der genannten ersten Korrektur (Da1) des Wertes der eingestellten zugeführten Luftmenge (Da) die genannte zweite Korrektur in einer offenen Regelschleife durch Berechnen oder durch Ablesen aus den Tabellen in Abhängigkeit von den durch die genannte Abschätzung (W) der von der Klimaanlage aufgenommenen Leistung erfaßten Werten so ermittelt wird, daß sich der Betrieb der geschlossenen Regelschleife für die Drehzahl des Motors (N) mit dem zuvor festgelegten Sollwert (Nc) vereinfacht.

16. Verfahren zur Steuerung eines Motors gemäß einem oder mehreren der Ansprüche 14 bis 15, **dadurch gekennzeichnet, daß** parallel zur vorübergehenden Korrektur des Wertes der eingestellten zugeführten Luftmenge (Da) die effektive Inbetriebnahme der Klimaanlage um eine Zeitspanne verzögert wird, die sich durch Berechnen oder durch Ablesen aus den Tabellen in Abhängigkeit von den durch die genannte Abschätzung (W) der von der Klimaanlage aufgenommenen Leistung erfaßten Werten ergibt.

17. Verfahren zur Steuerung eines Motors gemäß einem oder mehreren der Ansprüche 12 bis 16, **dadurch gekennzeichnet, daß** bei Erkennung des Steuersignals für die Außerbetriebnahme der Klimaanlage während des Leerlaufs sofort und während einer zuvor festgelegten Dauer der Wert der eingestellten zugeführten Luftmenge (Da) korrigiert wird, wobei diese Korrektur durch Berechnen oder durch Ablesen aus den Tabellen in Abhängigkeit von den durch die genannte Abschätzung (W) der von der Klimaanlage aufgenommenen Leistung erfaßten Werte so erfolgt, daß die effektive Außerbetriebnahme der Klimaanlage ruckfrei verläuft.

18. Verfahren zur Steuerung eines Motors gemäß Anspruch 17, **dadurch gekennzeichnet, daß** parallel zur vorübergehenden Korrektur des Wertes der eingestellten zugeführten Luftmenge (Da) die effektive Außerbetriebnahme der Klimaanlage um eine Zeitspanne verzögert wird, die sich durch Berechnen oder durch Ablesen aus den Tabellen in Abhängigkeit von den durch die genannte Abschätzung (W) der von der Klimaanlage aufgenommenen Leistung erfaßten Werten ergibt.

19. Verfahren zur Steuerung eines Motors gemäß einem oder mehreren der Ansprüche 12 bis 18, **dadurch gekennzeichnet, daß** im Leerlauf die Frühzündung (Av) gemäß einem zuvor festgelegten Wert gesteuert wird, sowie dadurch, daß während des Betriebs der Klimaanlage der Wert für die Frühzündung (Av) korrigiert wird, wobei diese Einstellung durch Berechnen oder durch Ablesen aus den Tabellen in Abhängigkeit von den durch die genannte Abschätzung (W) der von der Klimaanlage aufgenommenen Leistung erfaßten Werten erfolgt.

20. Verfahren zur Steuerung eines Motors gemäß einem oder mehreren der Ansprüche 10 bis 19, **dadurch gekennzeichnet, daß** die Kraftstoffeinspritzung im Leerlauf des Motors unterbrochen wird, wobei der genannte Leerlauf einerseits durch die Stellung des Gaspedals bei angehobenem Fuß und andererseits durch die Geschwindigkeiten des Kraftfahrzeugs und die Drehzahlen des Motors identifiziert wird, die über zuvor festgelegten Schwellenwerten (Sdéc1, Sdéc2) liegen, sowie dadurch, daß während des Betriebs der Klimaanlage die genannten Schwellenwerte durch Berechnen oder durch Ablesen aus den Tabellen in Abhängigkeit von den durch die genannte Abschätzung (W) der von der Klimaanlage aufgenommenen Leistung erfaßten Werten korrigiert werden.

21. Verfahren zur Steuerung eines Motors gemäß einem oder mehreren der Ansprüche 10 bis 20, **dadurch gekennzeichnet, daß** im Betrieb des Motors mit hoher Last und bei geringer Drehzahl die Betriebsunterbrechung der Klimaanlage in Abhängigkeit von den durch die genannte Abschätzung (W) der von der Klimaanlage aufgenommenen Leistung erfaßten Werten gesteuert wird.

## Claims

1. A process for estimating the power absorbed by the compressor (3) of an air conditioning installation on a motor vehicle (1) of the type comprising a closed refrigerating fluid circuit (2) on which is disposed said compressor (3), a condenser (4) associated with a first motor-fan unit (5), an expansion device (7), an evaporator (8) associated with a second motor-fan unit (9) and an air conditioning computer (11) for managing operation of the air conditioning installation in dependence on controls regulated by the user, said process comprising steps of acquiring values adopted by items of information linked to operation of said air conditioning installation and steps of computing or reading from tables said power absorbed in dependence on said values, said items of information comprising:

   - the high pressure (Pc) at the exit of the compressor (3), and
   - the speed of rotation (Nc) of the compressor (3),

   **characterised in that** said items of information also comprise the air flow rate (De) passing through the evaporator (8).

2. A process for estimating the power absorbed by the compressor (3) of an air conditioning installation according to claim 1 **characterised in that** the speed of rotation (Nc) of the compressor (3) is drawn from the speed of rotation (N) of the crankshaft of the engine (1).

3. A process for estimating the power absorbed by the compressor (3) of an air conditioning installation according to either one of claims 1 and 2 **characterised in that** the air flow rate (De) passing through the evaporator (8) is drawn from the speed of rotation of the second motor-fan unit (9).

4. A process for estimating the power absorbed by the compressor (3) of an air conditioning installation according to claim 3 **characterised in that** the speed of rotation of the second motor-fan unit (9) is controlled by the air conditioning computer (11) in accordance with the controls regulated by the user of the air conditioning installation and predefined strategies.

5. A process for estimating the power absorbed by the compressor (3) of an air conditioning installation according to any one of claims 1 to 4 **characterised in that** the high pressure (Pc) at the exit of the compressor (3) is measured at any point on the refrigerating fluid circuit (2) between the exit from said compressor (3) and the entry of said expansion device (7).

6. A process for estimating the power absorbed by an air conditioning installation on a motor vehicle (1) of the type comprising a closed refrigerating fluid circuit (2) on which is disposed a compressor (3), a condenser (4) associated with a first motor-fan unit (5), an expansion device (7), an evaporator (8) associated with a second motor-fan unit (9) and an air conditioning computer (11) for managing operation of the air conditioning installation in dependence on controls regulated by the user **characterised in that** said power absorbed by the air conditioning installation corresponds to the power absorbed by the compressor (3) alone and that said power absorbed by the compressor (3) alone is obtained by the process according to claims 1 to 5.

7. A process for estimating the power absorbed by an air conditioning installation according to claim 6 **characterised in that** added to the power absorbed by the compressor (3) alone is the power absorbed by said first motor-fan unit (5) and/or the power absorbed by said second motor-fan unit (9).

8. A process for estimating the power absorbed by an air conditioning installation according to claim 7 **characterised in that** the power absorbed by each of the motor-fan units (5; 9) is drawn from the speed of rotation of said motor-fan unit.

9. A process for estimating the power absorbed by an air conditioning installation according to claim 8 **characterised in that** the speed of rotation of each of the motor-fan units (5; 9) is controlled by the air conditioning computer (11) according to the controls regulated by the user of the air conditioning installation and predefined strategies.

10. A process for controlling an internal combustion engine (1) for a vehicle fitted with an air conditioning installation of the type comprising a closed refrigerating fluid circuit (2) on which is disposed a compressor (3) driven by the engine by way of a coupling system such as a controlled clutch pulley (13), a condenser (4) associated with a first motor-fan unit (5), an expansion device (7), an evaporator (9) associated with a second motor-fan unit (9), by means of which signals for controlling starting and stopping of the air conditioning installation are detected and by means of which the engine control parameters are consequently adjusted such as the air intake flow rate (Da), the amount of fuel injected (Ti) or the firing time of the spark plugs (Av), as well as the parameters for controlling the air conditioning installation such as the engaged or disengaged state (Ev) of the drive pulley (13) of the compressor (3) and/or operation of the motor-fan units (5, 9), and in the course of which there is continuously determined an estimation (W) of the power absorbed by the air conditioning installation when it is in operation, **characterised in that**, when the air conditioning installation is stopped, an estimation of the power that it would absorb if it were started is determined and that on the other hand as soon as the signal for starting the air conditioning installation is detected, in accordance with suitable strategies, correction is effected in respect of the values of the control parameters (Da, Ti, Av, Eb) in dependence on the values assumed by said estimation (W) of the power absorbed by the air conditioning installation.

11. A process for controlling an engine according to claim 10 **characterised by** computation or reading from tables the value of said estimation (W) of the power absorbed by the air conditioning installation in dependence on the values of the pressure (Pc) at the exit of the compressor (3), the speed of rotation of the engine (N), the air flow rate (De) passing through the evaporator (8) and optionally the rotational speeds of the motor-fan units (5, 9).

12. A process for controlling an engine according to any one of claims 10 and 11 **characterised in that** in an idle operating phase the air intake flow rate (Da) is controlled in such a way as to implement control of the speed of rotation of the engine (N) in dependence on a predetermined reference value (Nr) and that when the air conditioning installation is started said value of the reference mode (Nr) is corrected by computation or by reading from tables in dependence on the values adopted by said estimation (W) of the power absorbed by the air conditioning installation.

13. A process for controlling an engine according to claim 12 **characterised in that** the passage from a first reference value (Nr0) to a second reference value (Nr1) is controlled progressively, said passage being effected in accordance with a suitable law which is dependent on the spacing between the two values.

14. A process for controlling an engine according to any one of claims 12 and 13 **characterised in that** if the signal for controlling starting of the air conditioning installation is detected in the idle operating phase a first correction (Da1) is effected immediately and during a predetermined duration of the controlled value of the air intake flow rate (Da), said first correction being determined by computation or by reading from tables in dependence on the values adopted by said estimation (W) of the power absorbed by the air conditioning installation in such a way that effective starting of the air conditioning installation is implemented without jerks.

15. A process for controlling an engine according to claim 14 **characterised in that** after having implemented said first correction (Da1) of the controlled value of the air intake flow rate (Da) a second correction (Da2) of the controlled value of the air intake flow rate is implemented, said second correction referred to as open loop correction being determined by computation or by reading from tables in dependence on the values adopted by said estimation (W) of the power absorbed by the air conditioning installation in such a way as to facilitate functioning of the closed loop for controlling the speed of rotation of the engine (N) in dependence on the predetermined reference value (Nc).

16. A process for controlling an engine according to any one of claims 14 and 15 **characterised in that** in parallel with the temporary correction to the controlled value of the air intake flow rate (Da) effective starting of the air conditioning installation is delayed for a given duration by computation or by reading from tables in dependence on the values adopted by said estimation (W) of the power absorbed by the air conditioning installation.

17. A process for controlling an engine according to any one of claims 12 to 16 **characterised in that** if the signal for controlling stopping of the air conditioning installation is detected in the idle operating phase correction is effected immediately and during a predetermimed duration in respect of the controlled value of the air intake flow rate (Da) by computation or by reading from tables in dependence on the values adopted by said estimation (W) of the power absorbed by the air conditioning installation in such a way that stopping of the air conditioning installation is implemented without jerks.

18. A process for controlling an engine according to claim 17 **characterised in that** in parallel with the temporary correction to the controlled value of the air intake flow rate (Da) effective stopping of the air conditioning installation is delayed for a given duration by computation or by reading from tables in dependence on the values adopted by said estimation (W) of the power absorbed by the air conditioning installation.

19. A process for controlling an engine according to any one of claims 12 to 18 **characterised in that** in the idle operating phase the ignition advance (Av) is controlled in accordance with a predetermined value and that upon operation of the air conditioning installation the value of the ignition advance (Av) to be controlled is corrected by computation or by reading from tables in dependence on the values adopted by said estimation (W) of the power absorbed by the air conditioning installation.

20. A process for controlling an engine according to any one of claims 10 to 19 **characterised in that** fuel injection is interrupted in the deceleration phase of the engine, said deceleration phase being determined on the one hand by keeping the accelerator pedal in a foot-off position and on the other hand by the speeds of the motor vehicle and the engine being higher than predetermined threshold values (Sdec1, Sdec2) and that upon operation of the air conditioning installation said threshold values are corrected by computation or by reading from tables in dependence on the values adopted by said estimation (W) of the power absorbed by the air conditioning installation.

21. A process for controlling an engine according to any one of claims 10 to 20 **characterised in that** in the operating phase of the engine under heavy load and at low speed suspension of operation of the air conditioning installation is controlled in dependence on the values assumed by said estimation (W) of the power absorbed by the air conditioning installation.

FIG.1

EP 0 915 767 B1

FIG.2

EP 0 915 767 B1

# FIG.3

FLAG 1

1

0 ............................................................... t

T

Nr

Δt  ΔNr

Nr1

Nr0

REGIME

EP 0 915 767 B1

FIG.4